# EUROPÄISCHE PATENTANMELDUNG

(11) **EP 4 699 777 A1**
(43) Veröffentlichungstag der Anmeldung: **25.02.2026**
(21) Anmeldenummer: 24196222.4
(22) Anmeldetag: 23.08.2024
(51) Int. Cl.: B29C 45/26, B29C 45/33

(54) **SPRITZGUSSVERFAHREN MIT FORMTEILORIENTIERUNG**

(71) Anmelder: Ypsomed AG, 3401 Burgdorf (CH)
(72) Erfinder: Hoti, Arjen, 3123 Belp (CH)
(74) Vertreter: Meier Obertüfer, Jürg

(57) **Zusammenfassung**

Die Erfindung betrifft ein Verfahren zum Spritzgiessen eines Formteils mit einem Spritzgusswerkzeug in einer Spritzgussanlage, wobei das Spritzgusswerkzeug eine Düsenseite und eine Auswerferseite umfasst, umfassend die folgenden Schritte: Bewegen des Spritzgusswerkzeugs in eine geschlossene Position, in der die Düsenseite und die Auswerferseite aneinander anliegen, und Bewegen des Spritzgusswerkzeugs in eine geöffnete Position, wobei die Auswerferseite und die Düsenseite in einer Öffhungsrichtung voneinander wegbewegt werden. Gemäss der Erfindung weicht die Öffnungsrichtung von einer durch eine Bewegungsrichtung der Spritzgussanlage definierten Axialrichtung ab.

## Beschreibung

### TECHNISCHES GEBIET

Die vorliegende Erfindung betrifft das Spritzgiessen von Formteilen, vorzugsweise aus Kunststoff. Insbesondere betrifft die vorliegende Erfindung das Spritzgiessen von Formteilen für die Medizintechnik und/oder von komplexen Formteilen mit hohen Stückzahlen. Die vorliegende Erfindung betrifft speziell das Spritzgiessen von Formteilen für Selbst-Verabreichungsgeräte für fluide Medikamente, bevorzugt Autoinjektoren oder Injektionspens.

### HINTERGRUND DER ERFINDUNG

Mit Spritzgussanlagen können Formteile, insbesondere Formteile aus thermoplastischen Kunststoffen, in grossen Mengen hergestellt werden. Eine Aussenform des Formteils wird häufig definiert durch ein Spritzgusswerkzeug mit zwei Aussenschalen, die nach dem Spritzgussvorgang und einer anschliessenden Abkühlzeit von einigen Sekunden, in einer Öffnungsrichtung voneinander wegbewegt werden, um das Werkzeug zu öffnen. Die beiden Aussenschalen werden dabei in der Regel in einer Axialrichtung bewegt, die durch die Bewegungsrichtung der Spritzgussanlage definiert ist. Nach dem Öffnen kann das Formteil aus dem Spritzgusswerkzeug entnommen oder mit einem Auswerfer aus diesem ausgeworfen werden. Zur Herstellung von Hohlkörpern können zusätzlich Formkerne verwendet werden, welche zusammen mit den Aussenschalen einen Formhohlraum bilden. Zur Entformung des Formteils werden dann zunächst die Aussenschalen in einer Öffnungsrichtung voneinander wegbewegt und anschliessend werden die Formkerne von Kernzugeinheiten aus dem Spritzgusswerkzeug herausbewegt. Durch Anschlag und Blockieren der Formteile an einer Abstreifkante können die Formteile dabei von den Formkernen gelöst werden.

Aus dem Stand der Technik sind Spritzgusswerkzeuge bekannt, bei denen sich die Düse bzw. der Bereich, in dem der Kunststoff flüssig bleibt, bis zu dem Formteil erstreckt, so dass die Formteile direkt angespritzt werden können. Dadurch entsteht kein Abfall durch überschüssiges Material. Jedoch ergeben sich durch die Anforderungen an die Anspritzstelle und die dadurch erforderliche spezifische Platzierung der Anspritzstelle am Formteil Anforderungen an die Geometrie und die Ausrichtung der Formteile innerhalb des Spritzgusswerkzeugs. Beispielsweise muss an der Anspritzstelle genügend Platz für die Düse im Werkzeug vorhanden sein, um ausreichend stabile Aussenschalen und ein zuverlässiges Abkühlen des Formteils sicherzustellen. Das kann beispielsweise dann besonders wichtig sein, wenn der flüssige Kunststoff mit einem hohen Druck in den Hohlraum eingespritzt wird und dadurch von innen einen hohen Druck auf die Aussenschalen ausübt. Gleichzeitig muss auch an dem Formteil an der Anspritzstelle ausreichend Platz vorhanden sein. Die daraus resultierenden Einschränkungen können die Gestaltungsfreiheit der Formteile erheblich reduzieren. Dadurch können für bestimmte Geometrien Änderungen an den Formteilen und/oder Spritzgusswerkzeugen erforderlich sein, die hohe Kosten verursachen können und lange Entwicklungszeiten haben.

Alternativ können Spritzgusswerkzeuge mit Teilheisskanälen oder Kaltkanälen verwendet werden, bei denen zwischen dem Bereich, in dem der Kunststoff flüssig bleibt, und dem Formteil ein Bereich vorgesehen ist, in dem der Kunststoff beim Abkühlen des Formteils ebenfalls erstarrt. Bei derartigen Spritzgusswerkzeugen ist aufgrund des flexiblen Verlaufs der Kanäle die Gestaltungsfreiheit der Formteilgeometrie grösser und die Lage des Formteils im Spritzgusswerkzeug kann flexibler geändert werden. Durch das zusätzliche erstarrte Material entsteht jedoch für jedes Formteil ein sogenannter Anguss, der nach dem Spitzgiessen von den Formteilen entfernt werden muss, was zu zusätzlichen Arbeitsschritten und einem höheren Materialverbrauch führt. Der Materialverbrauch ist insbesondere dann grösser, wenn das überschüssige Material nicht wiederverwendet werden kann, was beispielsweise bei Formteilen für Injektionsgeräte für flüssige Medikamente oder anderen Medizintechnikprodukten aufgrund von speziellen Anforderungen an die dafür eingesetzten medical-grade Kunststoffe der Fall ist.

### DARSTELLUNG DER ERFINDUNG

Es ist deswegen eine Aufgabe der vorliegenden Erfindung, ein Formteil direkt ohne Anguss anzuspritzen, ohne bei der Entwicklung des Formteils Einschränkungen in Bezug auf die Geometrie des Formteils beachten zu müssen und ohne zusätzliche Kosten zu verursachen.

Die Aufgabe wird durch die Merkmale der unabhängigen Ansprüche gelöst. Bevorzugte Ausführungsformen sind Gegenstand der abhängigen Ansprüche.

Ein Aspekt der Erfindung betrifft ein Verfahren zum Spritzgiessen eines Formteils mit einem Spritzgusswerkzeug in einer Spritzgussanlage. Das Formteil besteht vorzugsweise aus Kunststoff, insbesondere aus thermoplastischem Kunststoff. Bei dem Formteil kann es sich insbesondere um eine Komponente einer Injektionsvorrichtung für ein flüssiges Medikament, wie ein Autoinjektor oder ein Injektionspen, handeln. Beispielsweise kann es sich bei dem Formteil um einen Spritzenhalter eines Autoinjektors handeln.

Das Spritzgusswerkzeug, in dem das Formteil hergestellt wird, umfasst eine Düsenseite und eine Auswerferseite, die die beiden Aussenschalen des Spritzgusswerkzeugs bilden. In der Düsenseite ist eine Düse ausgebildet, durch die das flüssige Spritzgussmaterial, insbesondere der flüssige Kunststoff, in einen zwischen den beiden Aussenschalen gebildeten Hohlraum eingespritzt wird. In Varianten des Spritzgusswerkzeugs zur Herstellung von mehreren Formteilen in einem Spritzgussvorgang können in der Düsenseite mehrere insbesondere parallel verlaufende Düsen ausgebildet sein. Der Hohlraum wird durch Vertiefungen oder Halbkavitäten, die als Gesenke bezeichnet werden, an der Düsenseite und/oder der Auswerferseite begrenzt. Das Spritzgusswerkzeug kann dazu ausgelegt sein nur ein Formteil herzustellen oder gleichzeitig mehrere, beispielsweise 2, 4, 8, 16 oder noch mehr, vorzugsweise identische Formteile herzustellen. In der Auswerferseite kann ein Auswerfer zum Ausstossen des fertigen Formteils aus dem Spritzgusswerkzeug angeordnet sein. In Varianten des Spritzgusswerkzeugs zur Herstellung von mehreren Formteilen gleichzeitig können mehrere Auswerfer vorgesehen sein oder der Auswerfer kann aus mehreren Teilen bestehen, um die mehreren Formteile gleichzeitig auswerfen zu können.

Das erfindungsgemässe Verfahren umfasst die folgenden Schritte: Bewegen des Spritzgusswerkzeugs in eine geschlossene Position, in der die Düsenseite und die Auswerferseite aneinander anliegen, und Bewegen des Spritzgusswerkzeugs in eine geöffnete Position, wobei die Düsenseite und die Auswerferseite in einer Öffnungsrichtung voneinander wegbewegt werden. In der geschlossenen Position befindet sich das Spritzgusswerkzeug insbesondere während dem Spritzgiessen bzw. während das Spritzguss-Material in den Hohlraum des Spritzgusswerkzeugs eingespritzt wird. In dieser Position ist der Hohlraum durch die Gesenke begrenzt, die in der geschlossenen Position des Spritzgusswerkzeugs entlang einer Gesenktrennebene aneinander anliegen. Die Gesenktrennebene bildet somit den Übergang zwischen den korrespondierenden Gesenken.

Erfindungsgemäss weicht die Öffnungsrichtung von einer durch eine Bewegungsrichtung und/oder Düsenrichtung der Spritzgussanlage definierten Axialrichtung ab. Mit anderen Worten ist die Öffnungsrichtung in einem spitzen Winkel zwischen 0° und 90° zu der Axialrichtung orientiert. Die Bewegungsrichtung der Spritzgussanlage ist dabei die Bewegungsrichtung, in der die Spritzgussanlage bzw. eine Komponente der Spritzgussanlage zum Öffnen und Schliessen des Spritzgusswerkzeugs bewegt wird. Insbesondere kann die Axialrichtung in horizontaler Richtung verlaufen. Die Öffnungsrichtung beinhaltet somit eine erste Bewegungskomponente in Axialrichtung, und eine zweite Bewegungskomponente senkrecht zur Axialrichtung, die beim Öffnen überlagert werden bzw. gleichzeitig ausgeführt werden. Um diese Öffnungsrichtung zu ermöglichen, ist bei dem Spritzgusswerkzeug die Gesenktrennebene anders als bei im Stand der Technik bekannten Spritzgusswerkzeugen nicht senkrecht zur Axialrichtung der Spritzgussanlage orientiert, sondern in einem spitzen Winkel zwischen 0° und 90° zur Axialrichtung orientiert.

Durch eine derartige Öffnungsrichtung ist es möglich, eine rotative Ausrichtung des Formteils in Bezug auf das Spritzgusswerkzeug als zusätzlichen Parameter bei der Entwicklung bzw. beim Festlegen des Formteil-Designs und/oder des Spritzgusswerkzeug-Designs zu nutzen. Mit andren Worten ist das Formteil um eine Achse senkrecht zur Öffnungsrichtung und in der Gesenktrennebene rotierbar. Entsprechend der rotativen Ausrichtung des Formteils kann dann eine entsprechende von der Axialrichtung abweichende Öffnungsrichtung vorgesehen werden. Statt der beschriebenen teuren Anpassungen an den Formteilen und/oder den Werkzeugen kann die rotative Ausrichtung des Formteils geändert werden, um eine geeignete Anspritzstelle an dem Formteil verwenden zu können. Beispielsweise kann das Formteil so rotativ ausgerichtet werden, dass ein Formteilabschnitt mit einer ausreichend grossen Wandstärke oder Wanddicke an die Einspritzdüse anschliesst bzw. als Anspritzstelle verwendet wird, auch wenn diese Stelle schräg am Formteil, mit anderen Worten zwischen einer durch die Gesenktrennebene definierten Mittelebene und einer Normalen zur Mittelebene, angeordnet ist. Dabei kann insbesondere die Einspritzdüse senkrecht zur Aussenseite des Spritzgussteils ausgerichtet sein. Durch die Abweichung der Öffnungsrichtung von der Axialrichtung kann somit eine grössere Anzahl von Formteil-Geometrien direkt angespritzt werden, ohne einen Anguss zu erzeugen, wobei gleichzeitig die Gestaltungsfreiheit der Formteilgeometrie weniger oder überhaupt nicht eingeschränkt wird. Durch das Wegfallen des Angusses kann ausserdem eine Materialeinsparung erreicht werden, die aus ökologischer und wirtschaftlicher Sicht wünschenswert ist. Jedoch kann das erfindungsgemässe Verfahren auch bei Teilheisskanal-Werkzeugen oder Kaltkanal-Werkzeugen verwendet werden, die für Formteile eingesetzt werden, bei denen es nicht notwendig ist, einen Anguss zu vermeiden. Auch bei derartigen Spritzgusswerkzeugen ergibt sich eine höhere Gestaltungsfreiheit der Formteile.

Zum Schliessen des Spritzgusswerkzeugs im ersten Schritt des erfindungsgemässen Verfahrens, können die Düsenseite und die Auswerferseite entgegen der Öffnungsrichtung bewegt werden. Somit kann auch eine Schliessrichtung von der Axialrichtung abweichen. Auf diese Weise kann das Spritzgusswerkzeug auf dem gleichen Weg geöffnet und geschlossen werden, so dass sich ein einfacher Aufbau des Spritzgusswerkzeugs und gegebenenfalls der Spritzgussanlage, in der das Spritzgusswerkzeug eingebaut wird, ergibt.

In einer bevorzugten Ausführungsform ist die Öffnungsrichtung in einem Winkel von 30° bis 60°, insbesondere von 45°, zur Axialrichtung orientiert. In der bevorzugten Variante, bei der ein Winkel von 45° vorgesehen ist, sind die erste Bewegungskomponente in Axialrichtung und die zweite Bewegungskomponente senkrecht zur Axialrichtung entsprechend gleich gross. In einer besonders bevorzugten Variante verläuft die Öffnungsrichtung ausserdem entlang einer horizontalen Ebene oder einer vertikalen Ebene. Bei dieser besonders bevorzugten Variante beinhaltet die Öffnungsrichtung somit eine erste Bewegungskomponente in Axialrichtung, und eine zweite Bewegungskomponente senkrecht zur Axialrichtung, die entlang der vertikalen Ebene nach oben oder unten gerichtet ist oder entlang der horizontalen Ebene zu einer der beiden Seiten des Spritzgusswerkzeugs gerichtet ist. Bei dieser bevorzugten Ausführungsform und besonders bei den bevorzugten Varianten kann die Bewegung des Spritzgusswerkzeugs in der von der Axialrichtung abweichenden Öffnungsrichtung konstruktiv einfach und mit wenigen zusätzlichen Komponenten gegenüber aus dem Stand der Technik bekannten Spritzgusswerkzeugen umgesetzt werden.

In einer weiteren bevorzugten Ausführungsform wird die Bewegung in die geöffnete Position vollständig durch eine Bewegung der Auswerferseite realisiert. Mit anderen Worten wird in dieser Ausführungsform nur die Auswerferseite in Öffnungsrichtung bewegt, während sich die Düsenseite nicht in der Öffnungsrichtung bewegt bzw. überhaupt nicht bewegt. Beispielsweise kann die Auswerferseite durch eine bewegliche Komponente der Spritzgussanlage bewegt werden, während die Düsenseite an einer unbeweglichen bzw. feststehenden Komponente der Spritzgussanlage fixiert ist. Der Vorteil dieser Ausführungsform besteht darin, dass der Aufbau des Spritzgusswerkzeugs weniger komplex ist, weil nur für die Auswerferseite ein Mechanismus zum Bewegen der Auswerferseite notwendig ist und ein solcher Mechanismus für die Düsenseite nicht vorgesehen sein muss. Dadurch können die Düsenzuleitungen bzw. Düsen in der Düsenseite statisch bleiben. Der Mechanismus zum Bewegen der Auswerferseite kann durch jede Art von Führungsvorrichtung realisiert werden, die eine definierte Bewegung der Auswerferseite ermöglicht. Beispielsweise kann die Bewegung der Auswerferseite durch einen hydraulischen Antrieb realisiert werden.

In einer weiteren bevorzugten Ausführungsform ist die Auswerferseite mit einer beweglichen Komponente der Spritzgussanlage gekoppelt, die sich zum Öffnen des Spritzgusswerkzeugs in Axialrichtung bewegt. Beim Öffnen verschiebt sich in dieser Ausführungsform die Auswerferseite gegenüber der beweglichen Komponente senkrecht zur Axialrichtung, um eine von der Bewegung der beweglichen Komponente der Spritzgussmaschine abweichende Bewegung in Öffnungsrichtung konstruktiv einfach zu ermöglichen. Auch in dieser Ausführungsform kann grundsätzlich jede Art von Führung verwendet werden, die eine definierte Bewegung der Auswerferseite gegenüber der beweglichen Komponente der Spritzgussmaschine bzw. Spritzgussanlage ermöglicht. Insbesondere kann die Bewegung der Auswerferseite in dieser Ausführungsform durch eine stationäre Leitfläche oder -kurve realisiert werden. In einer Variante kann die Auswerferseite gegenüber der beweglichen Komponente zusätzlich in Axialrichtung verschoben werden.

In einer weiteren bevorzugten Ausführungsform werden die Auswerferseite und die Düsenseite in einem zweiten Öffnungsschritt ausschliesslich in Axialrichtung voneinander wegbewegt. In dieser Ausführungsform wird das Formteil erst nach dem zweiten Öffnungsschritt aus dem Spritzgusswerkzeug ausgeworfen bzw. kann erst nach dem zweiten Öffnungsschritt aus dem Spritzgusswerkzeug entnommen werden. Insbesondere kann vorgesehen sein, dass auch für den zweiten Öffnungsschritt ausschliesslich die Auswerferseite bewegt wird, während sich die Düsenseite nicht bewegt. Durch den zweiten Öffnungsschritt entsteht mehr Platz zwischen den beiden Werkzeugseiten zum Ausstossen und/oder Herausnehmen des Formteils. Gleichzeitig erfordert die Öffnungsbewegung in dieser Ausführungsform nur eine kleine Bewegung der Auswerferseite und gegebenenfalls der Düsenseite senkrecht zur Axialrichtung, so dass das Spritzgusswerkzeug kostengünstiger und einfacher hergestellt werden kann.

In einer weiteren bevorzugten Ausführungsform umfasst das Spritzgusswerkzeug zusätzlich einen Formkern. In der geschlossenen Position des Spritzgusswerkzeugs ist der Formkern zwischen der Düsenseite und der Auswerferseite zumindest in einem Gesenk der Auswerferseite angeordnet. Bevorzugt ist der Formkern in einem Gesenk der Auswerferseite und einem Gesenk der Düsenseite angeordnet. Dabei weist die Auswerferseite und gegebenenfalls die Düsenseite insbesondere jeweils ein separates Gesenk auf für jedes herzustellende Formteil, das von den anderen Gesenken abgegrenzt ist. Der Formkern wird bei dieser Ausführungsform beim Öffnen mit der Auswerferseite bewegt und bewegt sich somit beim Öffnen des Spritzgusswerkzeugs in Öffnungsrichtung und gegebenenfalls anschliessend im zweiten Öffnungsschritt in Axialrichtung, sofern dieser zweite Öffnungsschritt vorgesehen ist. Auf diese Weise kann der Formkern einfach in das Spritzgusswerkzeug und in die Öffnungsbewegung integriert werden.

In einer bevorzugten Weiterbildung wird der Formkern nach dem Öffnen entgegen der Öffnungsrichtung, mit anderen Worten in einem Winkel von 180° zur Öffnungsrichtung, aus dem auswerferseitigen Gesenk der Auswerferseite herausbewegt. Bevorzugt ist dabei das Formteil weiterhin auf dem Formkern angeordnet, so dass das Formteil zusammen mit dem Formkern aus dem Gesenk der Auswerferseite herausbewegt werden kann. Anschliessend kann das Formteil durch eine Abstreifbewegung in einer vorteilhafterweise horizontalen Richtung bevorzugt senkrecht zur Öffnungs- und Axialrichtung, beispielsweise mit einer Anschlagskante von dem Formkern abgestreift werden, so dass das Formteil herunterfällt oder von einem Handling gegriffen werden kann. Auf diese Weise kann der Formkern einfach in das Spritzgusswerkzeug und in die Öffnungsbewegung intrigiert werden.

Ein zweiter Aspekt der Erfindung betrifft ein Spritzgusswerkzeug für eine Spritzgussanlage. Das erfindungsgemässe Spritzgusswerkzeug umfasst eine Düsenseite und eine Auswerferseite, wobei das Spritzgusswerkzeug derart ausgelegt ist, dass die Düsenseite und die Auswerferseite in einer geschlossenen Position des Spritzgusswerkzeugs aneinander anliegen und zum Öffnen des Spritzgusswerkzeugs die Auswerferseite und die Düsenseite in einer Öffnungsrichtung voneinander wegbewegbar sind. Erfindungsgemäss weicht die Öffnungsrichtung von einer durch eine Bewegungsrichtung der Spritzgussanlage definierten Axialrichtung ab. Vorzugsweise ist die Öffnungsrichtung in einem Winkel von 30° bis 60°, insbesondere von 45°, zur Axialrichtung orientiert. Insbesondere verläuft die Öffnungsrichtung ausserdem entlang einer horizontalen Ebene oder einer vertikalen Ebene. Für weitere bevorzugte Ausführungsformen und damit verbundene Wirkungen und Vorteile des erfindungsgemässen Spritzgusswerkzeugs wird auf die vorherigen Erläuterungen zu dem erfindungsgemässen Verfahren verwiesen, die auf das erfindungsgemässe Spritzgusswerkzeug in der gleichen Weise zutreffen.

In einer bevorzugten Ausführungsform weist die Auswerferseite an einer der Düsenseite zugewandten Auswerferseite-Innenseite ein auswerferseitiges Gesenk auf und die Düsenseite weist an einer der Auswerferseite zugwandten Düsenseite-Innenseite ein düsenseitiges Gesenk auf. Die Düsenseite und/oder die Auswerferseite können auch mehrere Gesenke aufweisen, insbesondere weisen die Düsenseite und/oder die Auswerferseite jeweils ein separates Gesenk für jedes herzustellende Formteil auf, das von den anderen Gesenken abgegrenzt bzw. getrennt ist. Dabei ist jeweils ein Gesenk an der Düsenseite in Axialrichtung gegenüber einem Gesenk an der Auswerferseite angeordnet, so dass in der geschlossenen Position des Spritzgusswerkzeugs jeweils ein düsenseitiges Gesenk und ein auswerferseitiges Gesenk aneinander anliegen und einen Hohlraum für ein Formteil bilden. Vorzugsweise sind an der Düsenseite und an der Auswerferseite gleich viele Gesenke vorhanden. Die Gesenke sind derart geformt, dass eine Gesenktrennebene, an der die Gesenke in der geschlossenen Position des Spritzgusswerkzeugs aneinander anliegen, senkrecht zur Öffnungsrichtung orientiert ist. Mit anderen Worten wird die rotative Ausrichtung der Gesenke und somit auch des zu fertigenden Formteils in Bezug auf eine senkrecht zur Axialrichtung verlaufenden Achse geändert. Durch eine derart ausgerichtete Gesenktrennebene kann das Spritzgusswerkzeug in der von der Axialrichtung abweichenden Öffnungsrichtung geöffnet werden, ohne das Formteil zu beschädigen.

In einer bevorzugten Weiterbildung weist die Auswerferseite eine von der Auswerferseite-Innenseite hervorstehende Erhöhung auf, in der das auswerferseitige Gesenk ausgebildet ist. In der geschlossenen Position des Spritzgusswerkzeugs kann das auswerferseitige Gesenk somit innerhalb der Düsenseite angeordnet sein. Die Düsenseite kann hierfür eine entsprechende Aussparung aufweisen. Dadurch ergibt sich bei Varianten, bei denen das Formteil nach dem Öffnen des Spritzgusswerkzeugs in der Auswerferseite bleibt, der Vorteil, dass nach dem Öffnen der Zugang zu dem auswerferseitigen Gesenk einfacher möglich ist, weil dieses von der Auswerfer-Innenseite hervorsteht und somit nach dem Öffnen einfacher zugänglich ist. Dadurch kann ein Bediener und/oder ein Handling das Formteil einfacher greifen. In einer alternativen Variante kann auch die Düsenseite eine von der Düsenseite-Innenseite hervorstehende Erhöhung aufweisen, in der das Gesenk ausgebildet ist, und die Auswerferseite eine entsprechende Aussparung, wenn vorgesehen ist, dass das Formteil nach dem Öffnen des Spritzgusswerkzeugs in der Düsenseite verbleibt, so dass in dieser alternativen Variante ebenfalls der Zugriff auf das Formteil vereinfacht ist.

In einer weiteren bevorzugten Weiterbildung weist die Düsenseite an der Düsenseite-Innenseite eine Vertiefung auf, in der das Gesenk ausgebildet ist. In einer bevorzugten Weiterbildung ist das Gesenk in einer in der Vertiefung angeordneten Erhöhung ausgebildet. Insbesondere kann vorgesehen sein, dass das Gesenk an der Düsenseite nicht über die Düsenseite-Innenseite hervorsteht. Auf diese Weise ist die Düsenseite besonders gut mit der Auswerferseite gemäss der vorherigen bevorzugten Weiterbildung kompatibel. Entsprechend kann in einer alternativen Variante auch vorgesehen sein, dass die Vertiefung und gegebenenfalls die Erhöhung in der Vertiefung statt an der Düsenseite an der Auswerferseite vorgesehen ist bzw. sind.

In einer bevorzugten Weiterbildung ist die Erhöhung an der Düsenseite und/oder die Erhöhung an der Auswerferseite jeweils als separates Bauteil ausgebildet das lösbar mit der Düsenseite oder der Auswerferseite verbunden werden kann. Auf diese Weise kann das Gesenk einfach getauscht werden, ohne das gesamte Werkzeug ändern oder tauschen zu müssen. Auf diese Weise können Gesenke für unterschiedliche Geometrien und/oder für unterschiedliche Öffnungsrichtungen verwendet werden, so dass auf teure Anpassungen des gesamten Werkzeugs oder der Formteilgeometrie verzichtet werden kann. Auch bei einem Umrüsten oder der Reparatur eines Spritzgusswerkzeugs ergibt sich dadurch vorteilhaft ein geringerer Zeit- und Montageaufwand, weil statt dem gesamten Spritzgusswerkzeug nur die Erhöhung mit dem Gesenk ausgetauscht werden kann.

In einer weiteren bevorzugten Ausführungsform umfasst die Düsenseite eine Düse, die sich senkrecht zur Werkzeugtrennebene bzw. in Axialrichtung, von einer der Auswerferseite abgewandten Düsenseite-Aussenseite zu dem düsenseitigen Gesenk an der Düsenseite-Innenseite erstreckt. Es ist auch möglich, dass die Düsenseite mehrere, insbesondere parallel zueinander verlaufende Düsen aufweist. Auf diese Weise ist ein Zugriff auf die Düse und der Anschluss der notwendigen Leitungen für das Spritzgussmaterial sowie gegebenenfalls benötigte Kühlflüssigkeit einfach von einer Seite der Düsenseite, der Düsenseiten-Aussenseite, aus möglich. Dadurch ist das Werkzeug weniger komplex und somit einfacher und günstiger herzustellen und gleichzeitig ist die Bedienung der Spritzgussanlage einfacher sowie ein Umrüsten der Spritzgussanlage schneller möglich.

Ein weiterer Aspekt der Erfindung betrifft ein Spritzgussteil. Das erfindungsgemässe Spritzgussteil ist durch das erfindungsgemässe Verfahren und/oder mit dem erfindungsgemässen Spritzgusswerkzeug hergestellt. Das Spritzgussteil umfasst zwei durch eine Mittelebene getrennte Hälften. Die Mittelebene entspricht der Gesenktrennebene des erfindungsgemässen Spritzgusswerkzeugs. Vorzugsweise können die beiden Hälften identisch ausgebildet sein. Erfindungsgemäss ist eine Anspritzstelle an der Aussenseite des Spritzgussteils zwischen der Mittelebene und einer Normale zur Mittelebene ausgebildet. Die Axialebene verläuft dabei entlang einer Axialrichtung des Spritzgussteils und senkrecht zu der Mittelebene. Mit anderen Worten ist die Axialebene um 90° zu der Mittelebene gedreht. Die Anspritzstelle ist somit schräg an dem Spritzgussteil angeordnet. Vorzugsweise kann die Anspritzstelle in einem Winkel zwischen 30° und 60° zu der Mittelebene, besonders bevorzugt in einem Winkel von 45° zur Mittelebene und somit an der Aussenseite des Spritzgussteils in der Mitte zwischen der Mittelebene und der Normale zur Mittelebene, ausgebildet sein. Diese Anordnung der Anspritzstelle ergibt sich direkt durch die Öffnungsrichtung der Auswerferseite und gegebenenfalls der Düsenseite gemäss dem erfindungsgemässen Verfahren und/oder durch die Orientierung der Gesenke bzw. der Gesenktrennebene des erfindungsgemässen Spritzgusswerkzeugs. Bei dem Verfahren und dem Spritzgusswerkzeug ist eine rotative Ausrichtung des Spritzgussteils gedreht in Bezug auf eine Achse senkrecht zur Axialrichtung, so dass die Düse und somit die Anspritzstelle schräg an dem Spritzgussteil liegen.

In einer bevorzugten Ausführungsform besteht das Spritzgussteil aus Kunststoff oder umfasst Kunststoff, insbesondere thermoplastischen Kunststoff. Bei dem Kunststoff kann es sich beispielsweise um einen medical-grade Kunststoff handeln, der die Materialanforderungen für Kunststoffe erfüllt, die für Medizintechnikprodukte eingesetzt werden. Das Spritzgussteil kann eine Komponente eines Selbst-Verabreichungsgeräts für fluide oder flüssige Medikamente sein. Insbesondere kann das Spritzgussteil eine Komponente eines Injektionsgeräts für ein flüssiges Medikament, wie ein Injektionspen oder ein Autoinjektor, sein. Beispielsweise kann das Spritzgussteil ein Spritzenhalter für einen Autoinjektor sein.

### FIGUREN

In Zusammenhang mit den angehängten Figuren werden nachfolgend beispielhafte Ausführungen der Erfindung beschrieben. Diese sollen grundsätzliche Möglichkeiten der Erfindung aufzeigen und keinesfalls einschränkend ausgelegt werden. Es zeigen:
- Fig. 1: eine beispielhafte Ausführung eines erfindungsgemässen Spritzgussteils;
- Fig. 2: eine beispielhafte Ausführung einer Auswerferseite eines erfindungsgemässen Spritzgusswerkzeugs;
- Fig. 3: die Auswerferseite aus Fig. 2 in einer Schnittansicht entlang Linie III-III in Fig. 2;
- Fig. 4: eine beispielhafte Ausführung einer Düsenseite eines erfindungsgemässen Spritzgusswerkzeugs;
- Fig, 5: die Düsenseite aus Fig. 4 in einer Schnittansicht entlang der Linie V-V in Fig. 4;
- Fig. 6: eine beispielhafte Ausführung eines erfindungsgemässen Spritzgusswerkzeugs in einer geschlossenen Position;
- Fig. 7: das Spritzgusswerkzeug aus Fig. 6 nach dem ersten Öffnungsschritt;
- Fig. 8: das Spritzgusswerkzeug aus Fig. 6 und 7 nach dem zweiten Öffnungsschritt mit aus dem Gesenk gehobenen Formkern;
- Fig. 9: eine Detailansicht des Bereichs IX in Fig. 6;
- Fig. 10: eine Detailansicht des Bereichs X in Fig. 7; und
- Fig. 11: eine Detailansicht des Bereichs XI in Fig. 8.

### FIGURENBESCHREIBUNG

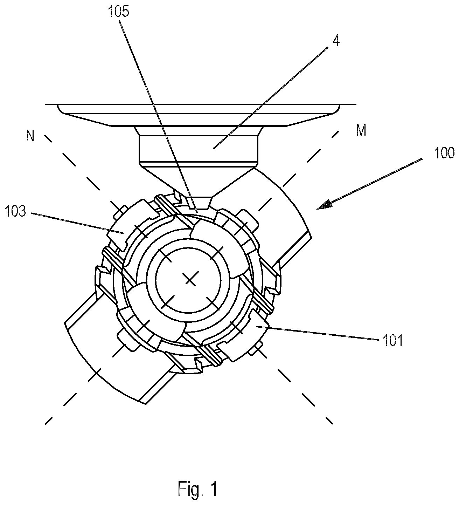

Fig. 1 zeigt ein erfindungsgemässes Formteil bzw. Spritzgussteil 100, bei dem es sich beispielhaft um einen Spritzenhalter aus thermoplastischem Kunststoff für einen Autoinjektor zur Injektion eines flüssigen Medikaments handelt. Das Spritzgussteil 100 umfasst zwei identische, spiegelsymmetrische Hälften 101, 103, die eine Mittelebene M definieren. Bei dem erfindungsgemässen Spritzgussteil 100 befindet sich eine Anspritzstelle 105, an der sich während des Spritzgiessens eine in Fig. 1 schematisch dargestellte Düse 4 des Spritzgusswerkzeugs befindet, durch die der flüssige Kunststoff in den Hohlraum des Spritzgusswerkzeugs eingespritzt wird, an der Aussenseite des Spritzgussteils 100 zwischen der Mittelebene M und einer Normalen N zur Mittelebene M. Die Positionierung der Anspritzstelle 105 ergibt sich direkt durch das erfindungsgemässe Verfahren, mit dem das Spritzgussteil 100 hergestellt wurde, und das erfindungsgemässe Spritzgusswerkzeug, das dafür verwendet wurde.

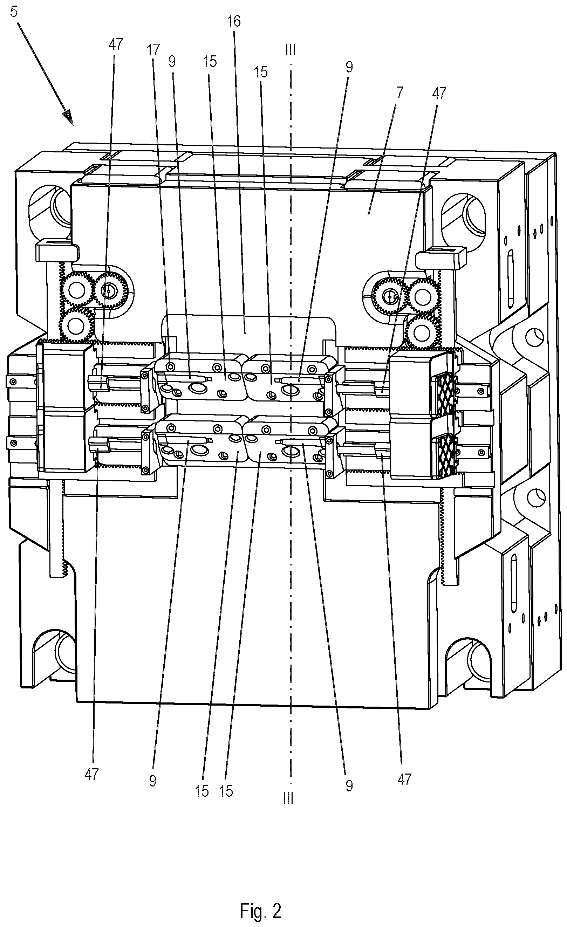

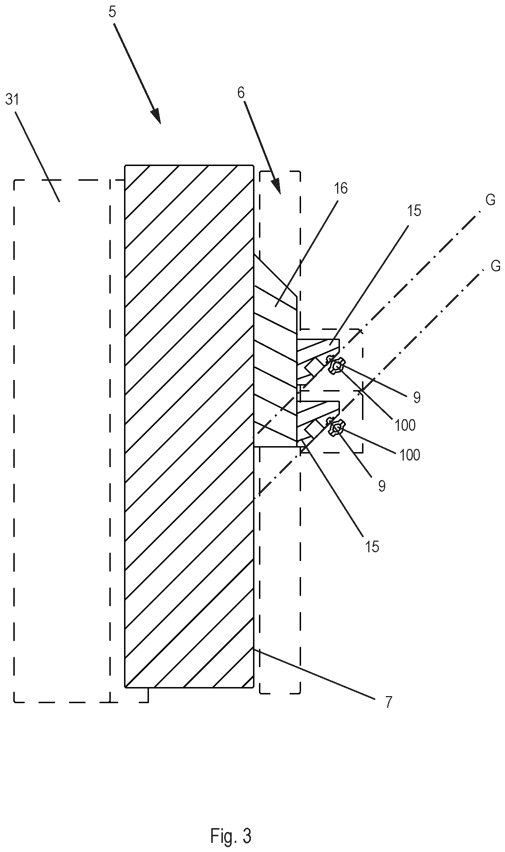

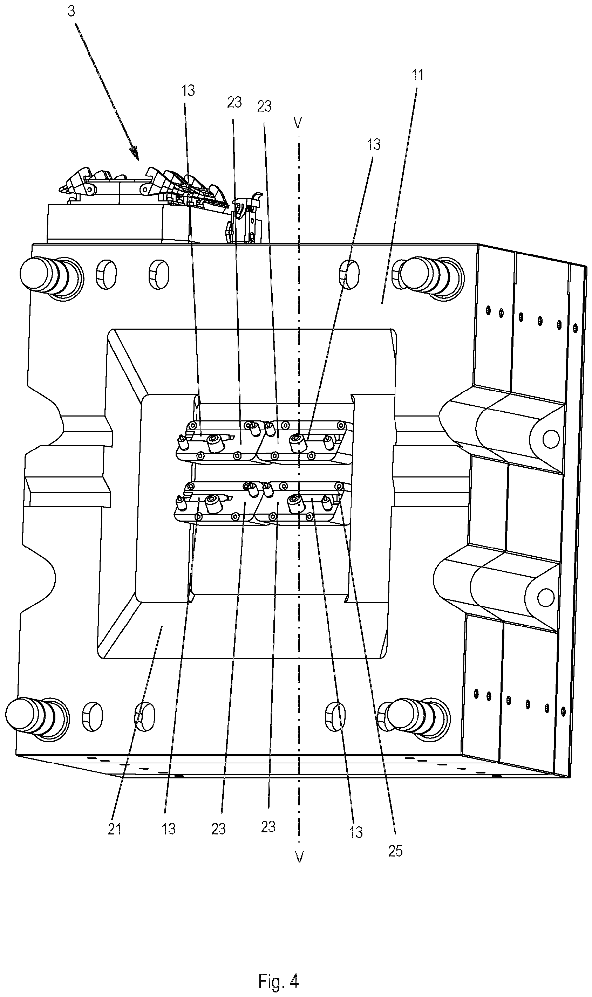

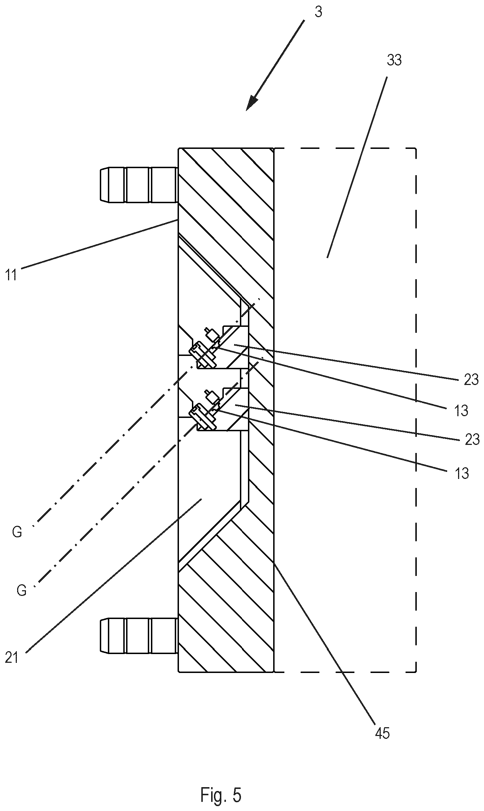

Im Folgenden wird das erfindungsgemässe Spritzgusswerkzeug anhand von Fig. 2 bis 5 im Detail erläutert. Das Spritzgusswerkzeug gemäss dieser Ausführung umfasst eine Düsenseite 3 und eine Auswerferseite 5, die die Aussenschalen des Spritzgusswerkzeugs bilden und die Aussenform des erfindungsgemässen Spritzgussteils definieren. Fig. 2 zeigt dabei die Auswerferseite 5 in einer perspektivischen Ansicht, Fig. 3 zeigt die Auswerferseite 5 in einer Schnittansicht, Fig. 4 zeigt die Düsenseite 3 in einer perspektivischen Ansicht und Fig. 5 zeigt die Düsenseite 3 in einer Schnittansicht.

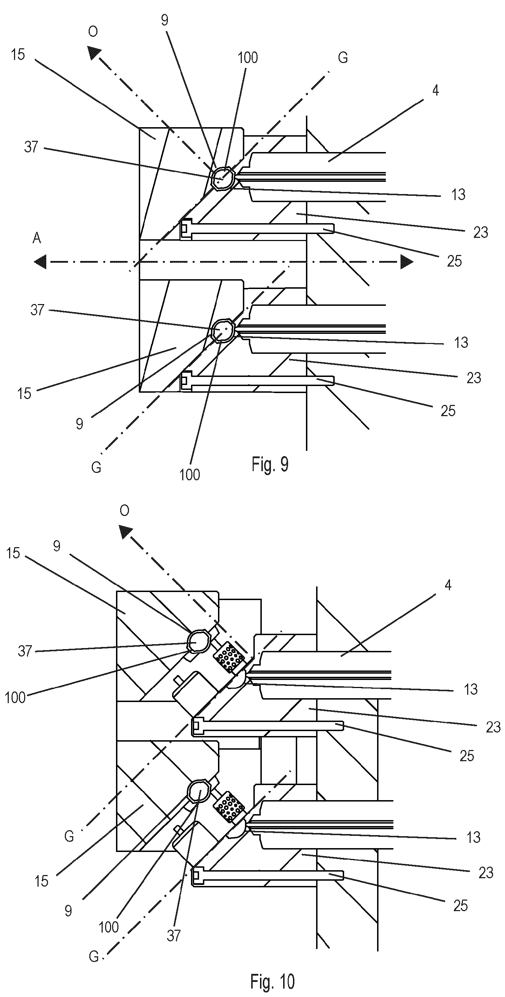

Das Spritzgusswerkzeug umfasst ausserdem eine Formkernanordnung 6, die zwischen der Düsenseite 3 und der Auswerferseite 5 angeordnet ist und in Fig. 3 nur schematisch dargestellt ist. Die Formkernanordnung 6 umfasst für jedes düsenseitige Gesenk und auswerferseitige Gesenk einen in dem durch die Gesenke gebildeten Hohlraum angeordneten Formkern, der in den Figuren 9 bis 11 zu erkennen ist. Die Formkernanordnung umfasst ausserdem einen mit den Formkernen gekoppelten Formkernträger, mit dem die Formkerne in Bezug auf die Auswerferseite 5 und die Düsenseite 3 bewegt werden können.

In Fig. 2 ist die Auswerferseite-Innenseite 7 der Auswerferseite 5 zu erkennen, die in der geschlossenen Position des Spritzgusswerkzeugs der Düsenseite zugewandt ist. Zwischen der Auswerferseite 5 und der Düsenseite ist in dieser Ausführung des erfindungsgemässen Spritzgusswerkzeugs die Formkernanordnung 6 angeordnet, die in Fig. 3 nur schematisch dargestellt ist. Der Formkernträger der Formkernanordnung 6 liegt in dieser Ausführung in der geschlossenen Position des Spritzgusswerkzeugs an der Auswerferseite 5 und an der Düsenseite an. In anderen Ausführungen ohne Formkernanordnung oder mit einer anders ausgebildeten Formkernanordnung kann die Auswerfer-Innenseite 7 auch direkt an der Düsenseite-Innenseite anliegen. An der Auswerferseite-Innenseite 7 sind insgesamt vier auswerferseitige Gesenke 9 vorgesehen, in denen jeweils ein Spritzgussteil 100 spritzgegossen werden kann. Die Gesenke 9 sind in dieser Ausführung alle identisch ausgebildet, um vier identische Formteile 100 herstellen zu können. Die Gesenke 9 sind jeweils auf einer Erhöhung 15 angeordnet, die von der Innenseite 7 aus hervorstehen. In anderen Ausführungen können die Erhöhungen in vertikaler Richtung auch weiter voneinander entfernt sein. In jedem Fall müssen die Erhöhungen 15 aber in vertikaler Richtung so weit voneinander entfernt sein, dass die untere Erhöhung 15 bei der Öffnungsbewegung nicht an der Düsenseite, beispielsweise an einer Erhöhung der Düsenseite für das darüberliegende Formteil, anstösst. Die vier auswerferseitigen Gesenke 9 sind in dieser Ausführung jeweils in einer einzelnen Erhöhung 15 ausgebildet, die an einer gemeinsamen Erhöhung 16 mit jeweils vier Schrauben 17 lösbar befestigt sind. In anderen Ausführungen kann auch vorgesehen sein, dass die Erhöhungen 15 direkt an der Auswerferseite 5 befestigt sind, oder dass die Gesenke 9 in der gemeinsamen Erhöhung 16 ausgebildet sind. Die Auswerferseite 5 umfasst ausserdem für jedes Gesenk 9 einen Auswerfer 47, mit dem die Formteile 100 nach dem Öffnen des Spritzgusswerkzeugs aus den Gesenken 9 gelöst werden können.

In Fig. 4 ist die Düsenseite-Innenseite 11 der Düsenseite 3 zu erkennen, die der Auswerferseite zugewandt ist und in der geschlossenen Position des Spritzgusswerkzeugs an dem Formkernträger anliegt. In anderen Ausführungen kann die Düsenseite-Innenseite 11 auch direkt an der Auswerferseite anliegen. An der Innenseite 11 sind insgesamt vier düsenseitige Gesenke 13 vorgesehen, in denen jeweils ein Spritzgussteil 100 spritzgegossen werden kann. Die Gesenke 13 sind in dieser Ausführung alle identisch ausgebildet, um vier identische Formteile 100 herstellen zu können. An der Düsenseite-Innenseite 11 ist eine Vertiefung 21 ausgebildet, in der die Gesenke 13 angeordnet sind. In der Vertiefung 21 sind vier Erhöhungen 23 lösbar mit jeweils vier Schrauben 25 befestigt. In jeder Erhöhung 23 ist dabei ein düsenseitiges Gesenk 13 ausgebildet.

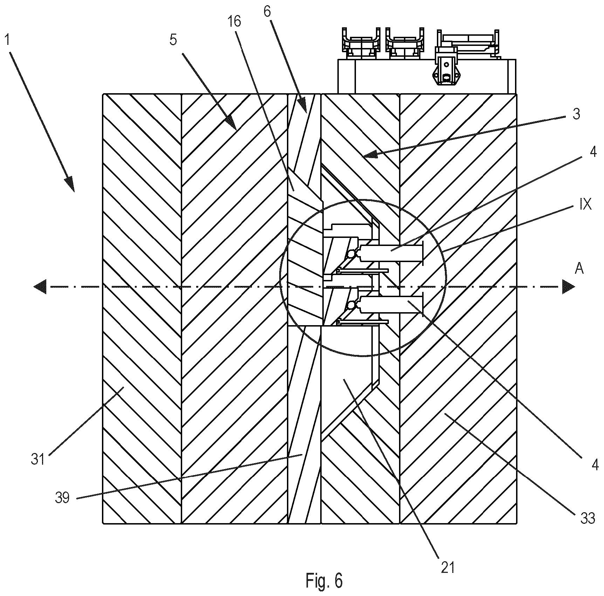

Im Folgenden wird das erfindungsgemässe Verfahren zum Spritzgiessen eines Formteils 100 anhand der Fig. 6 bis 11 im Detail erläutert.

Fig. 6 und Fig. 9 zeigen das erfindungsgemässe Spritzgusswerkzeug 1 umfassend die Düsenseite 3, die Auswerferseite 5 und die Formkernanordnung 6 in der geschlossenen Position, in der die Auswerferseite 5, der Formkernträger 39 und die Düsenseite 3 aneinander anliegen. Jeweils ein düsenseitiges Gesenk 13 und ein auswerferseitiges Gesenk 9 sind in der geschlossenen Position einander gegenüber angeordnet und definieren zusammen mit dem zugehörigen Formkern 37 einen Hohlraum, in den das Spritzgussteil 100 eingespritzt wird (siehe Fig. 9). Die Düsenseite 3 umfasst ausserdem für jedes düsenseitige Gesenk 13 eine Düse 4, die sich von einer Düsenseite-Aussenseite 45 in Axialrichtung A bis zu dem jeweiligen Gesenk 13 erstreckt. Fig. 9 zeigt den Ausschnitt IX in Fig. 6 in einer vergrösserten Ansicht. Es ist zu erkennen, dass das auswerferseitige Gesenk 9 und das düsenseitige Gesenk 13 in der geschlossenen Position des Spritzgusswerkzeugs 1 entlang einer Gesenktrennebene G aneinander anliegen. Erfindungsgemäss ist die Gesenktrennebene G senkrecht zur Öffnungsrichtung O orientiert und damit gegenüber der Axialrichtung A in einem spitzen Winkel geneigt. Dadurch kann das Spritzgusswerkzeug 1 in der Öffnungsrichtung O geöffnet werden, ohne das Formteil 100 beispielsweise durch Abscheren zu beschädigen.

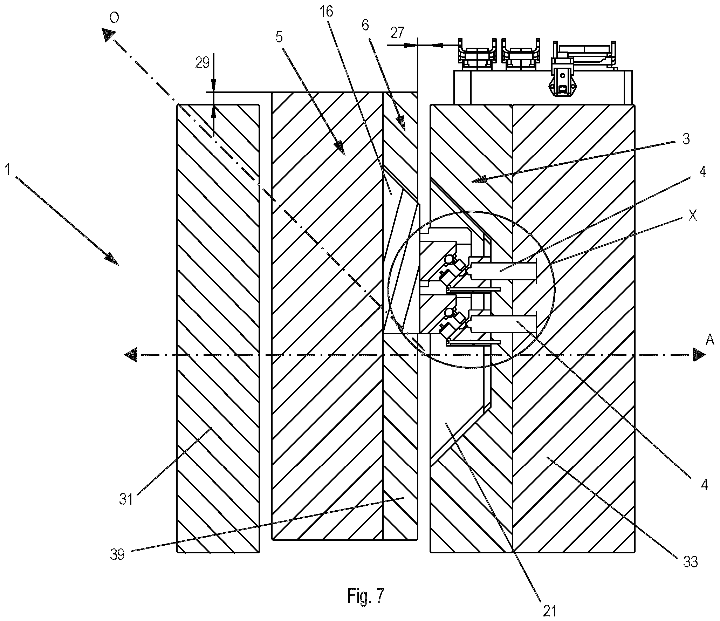

Nach dem Spritzgiessen des Formteils 100 wird das Spritzgusswerkzeug 1 geöffnet. In Fig. 7 und Fig. 10 ist ein erster Öffnungsschritt dargestellt, in dem die Düsenseite 3 und die Auswerferseite 5 voneinander wegbewegt werden. Die Formkernanordnung 6 bewegt sich in dieser Ausführung zusammen mit der Auswerferseite 5. Bei dem erfindungsgemässen Verfahren werden dabei die Düsenseite 3 und die Auswerferseite 5 mit der Formkernanordnung 6 in einer Öffnungsrichtung O voneinander wegbewegt, die von der Axialrichtung A abweicht. Die Öffnungsbewegung entlang der Öffnungsrichtung O hat somit erfindungsgemäss eine erste Bewegungskomponente in Axialrichtung A, die in Fig. 7 mit dem Bezugszeichen 27 gekennzeichnet ist, und eine zweite Bewegungskomponente senkrecht zur Axialrichtung A, die in Fig. 7 mit dem Bezugszeichen 29 gekennzeichnet ist. In dieser Ausführung verläuft die Öffnungsrichtung O in einem Winkel von 45° zur Axialrichtung A und entlang einer vertikalen Ebene, so dass die erste Bewegungskomponente 27 und die zweite Bewegungskomponente 29 gleich gross sind. Das erfindungsgemässe Spritzgusswerkzeug 1 ist entsprechend dazu ausgelegt ein derartiges Öffnen entlang der Öffnungsrichtung O zu ermöglichen.

In der Ausführung in den Fig. 6 bis 11 wird zum Öffnen ausschliesslich die Auswerferseite 5 mit der Formkernanordnung 6 bewegt, während sich die Düsenseite 3 nicht in Öffnungsrichtung O bewegt. Mit anderen Worten wird die gesamte Öffnungsbewegung von der Auswerferseite 5 durchgeführt. Zum Öffnen und Schliessen des Spritzgusswerkzeugs 1 ist die Auswerferseite 5 dafür mit einer beweglichen Komponente 31 der Spritzgussanlage gekoppelt. Wie in Fig. 7 zu erkennen ist, bewegt sich die Komponente 31 der Spritzgussanlage beim Öffnen in Axialrichtung A. Um die davon abweichende Öffnungsrichtung O der Auswerferseite 5 zu ermöglichen, verschiebt sich die Auswerferseite 5 gegenüber der Komponente 31 senkrecht zur Axialrichtung A nach oben. Zusätzlich bewegt sich die Auswerferseite 5 in dieser Ausführung in Axialrichtung A von der beweglichen Komponente 31 weg, was in anderen Ausführungen aber nicht zwingend notwendig ist. Die Formkernanordnung 6 bewegt sich dabei zusammen mit der Auswerferseite 5 in der Öffnungsrichtung O. Die Düsenseite 3 ist an einer feststehenden Komponente 33 der Spritzgussanlage befestigt und bewegt sich somit nicht.

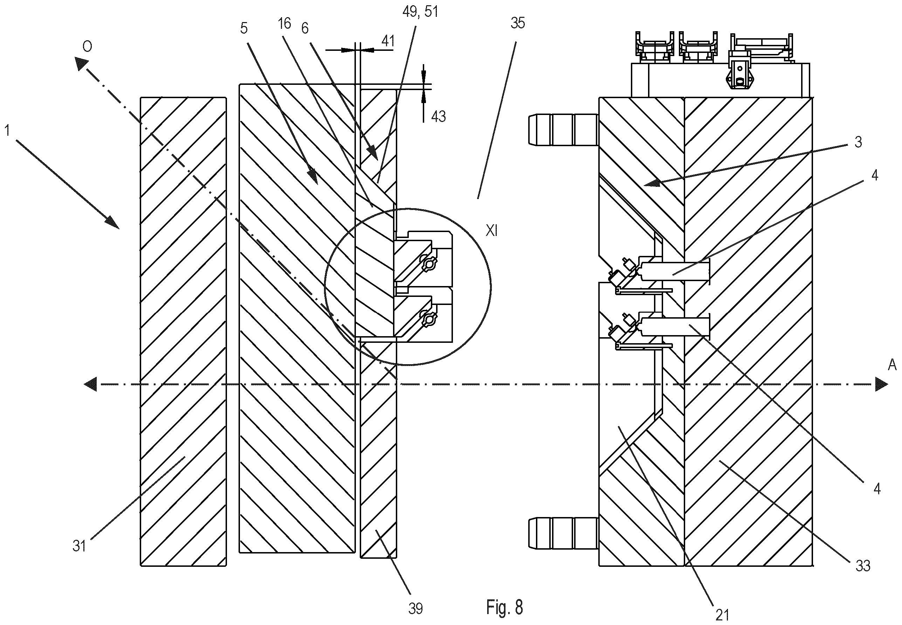

In einem zweiten Öffnungsschritt, der aus einem Vergleich von Fig. 7 und Fig. 8 ersichtlich ist, wird die Auswerferseite 5 mit der Formkernanordnung 6 in Axialrichtung A bewegt, so dass ein Abstand 35 in Axialrichtung A zwischen der Düsenseite 3 und der Auswerferseite 5 bzw. dem Formkernträger 39 grösser wird. Dadurch können die Formteile 100 einfacher aus dem Spritzgusswerkzeug 1 entnommen werden.

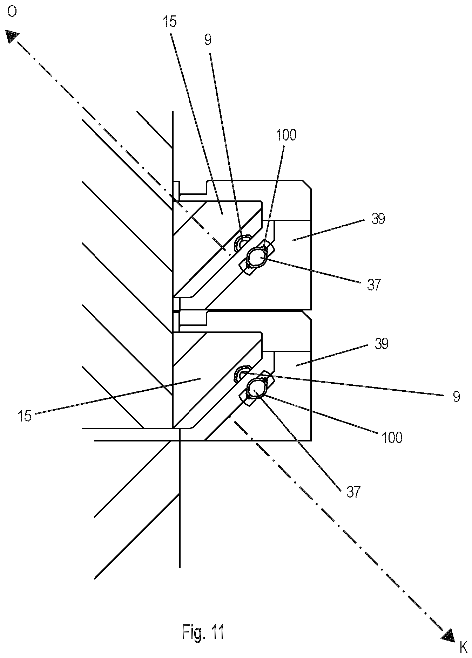

Nach dem Öffnen des Spritzgusswerkzeugs 1 wird der Formkern 37 entgegen der Öffnungsrichtung O aus dem auswerferseitigen Gesenk 9 herausbewegt (siehe Fig. 8 und Fig. 11). Die Kernöffnungsrichtung K der Formkerne 37 umfasst somit eine dritte Bewegungskomponente in Axialrichtung A, die in Fig. 8 mit dem Bezugszeichen 41 gekennzeichnet ist, und eine vierte Bewegungskomponente senkrecht zur Axialrichtung A nach unten, die in Fig. 8 mit dem Bezugszeichen 43 gekennzeichnet ist. Bei dieser Ausführung sind die dritte Bewegungskomponente 41 und die vierte Bewegungskomponente 43 gleich gross. Die Bewegung der Formkerne 37 wird in dieser Ausführung durch eine Schräge 49 an der Erhöhung 16 der Auswerferseite 5 und eine darauf abgestimmte Schräge 51 an der Formkernplatte 39 realisiert. Wie in Fig. 8 zu erkennen ist, verschiebt sich beim Herausschieben der Formkerne 37 aus den Gesenken 9 die Formkernplatte 39 in Bezug auf die Auswerferseite 5 nach unten und in Axialrichtung A von der Auswerferseite 5 weg.

### BEZUGSZEICHENLISTE

- 1: Spritzgusswerkzeug
- 100: Spritzgussteil
- 3: Düsenseite
- 4: Düse
- 5: Auswerferseite
- 6: Formkernanordnung
- 7: Auswerferseite-Innenseite
- 9: auswerferseitiges Gesenk
- 11: Düsenseite-Innenseite
- 13: düsenseitiges Gesenk
- 15, 16: Erhöhung
- 17: Schrauben
- 21: Vertiefung
- 23: Erhöhung
- 25: Schrauben
- 27: erste Bewegungskomponente
- 29: zweite Bewegungskomponente
- 31: bewegliche Komponente Spritzgussanlage
- 33: feststehende Komponente Spritzgussanlage
- 35: Abstand
- 37: Formkern
- 39: Formkernträger
- 41: dritte Bewegungskomponente
- 43: vierte Bewegungskomponente
- 45: Düsenseite-Aussenseite
- 47: Auswerfer
- 49, 51: Schräge
- 101, 103: Spritzgussteil-Hälfte
- 105: Anspritzstelle
- A: Axialrichtung
- G: Gesenktrennebene
- K: Kernöffnungsrichtung
- M: Mittelebene
- N: Normale
- O: Öffnungsrichtung

## Patentansprüche

1. Verfahren zum Spritzgiessen eines Formteils (100) mit einem Spritzgusswerkzeug (1) in einer Spritzgussanlage, wobei das Spritzgusswerkzeug (1) eine Düsenseite (3) und eine Auswerferseite (5) umfasst, umfassend die folgenden Schritte:
Bewegen des Spritzgusswerkzeugs (1) in eine geschlossene Position, in der die Düsenseite (3) und die Auswerferseite (5) aneinander anliegen, und Bewegen des Spritzgusswerkzeugs (1) in eine geöffnete Position, wobei die Düsenseite (3) und die Auswerferseite (5) in einer Öffnungsrichtung (O) voneinander wegbewegt werden,
**dadurch gekennzeichnet, dass** die Öffnungsrichtung (O) von einer durch eine Bewegungsrichtung der Spritzgussanlage definierten Axialrichtung (A) abweicht.

2. Verfahren nach Anspruch 1, wobei die Öffnungsrichtung (O) in einem Winkel von 30° bis 60°, insbesondere von 45°, zur Axialrichtung (A) orientiert ist und wobei die Axialrichtung (A) insbesondere entlang einer horizontalen oder vertikalen Ebene verläuft.

3. Verfahren nach Anspruch 1 oder 2, wobei die Bewegung in die geöffnete Position vollständig durch eine Bewegung der Auswerferseite (5) realisiert wird.

4. Verfahren nach einem der vorhergehenden Ansprüche, wobei die Auswerferseite (5) mit einer beweglichen Komponente (31) der Spritzgussanlage gekoppelt ist, die sich zum Öffnen des Spritzgusswerkzeugs (1) in Axialrichtung (A) bewegt, wobei sich die Auswerferseite (5) beim Öffnen gegenüber der beweglichen Komponente (31) senkrecht zur Axialrichtung (A) verschiebt.

5. Verfahren nach einem der vorhergehenden Ansprüche, wobei die Auswerferseite (5) und die Düsenseite (3) in einem zweiten Öffnungsschritt in Axialrichtung (A) voneinander wegbewegt werden, wobei insbesondere ausschliesslich die Auswerferseite (5) bewegt wird.

6. Verfahren nach einem der vorhergehenden Ansprüche, wobei das Spritzgusswerkzeug (1) zusätzlich einen Formkern (37) umfasst, der in der geschlossenen Position des Spritzgusswerkzeugs (1) zwischen der Düsenseite (3) und der Auswerferseite (5) zumindest in einem auswerferseitigen Gesenk (9) der Auswerferseite (5) angeordnet ist, insbesondere in dem auswerferseitigen Gesenk (9) und einem düsenseitigen Gesenk (13) der Düsenseite (3) angeordnet ist, wobei der Formkern (37) beim Öffnen mit der Auswerferseite (5) bewegt wird.

7. Verfahren nach Anspruch 6, wobei der Formkern (37) nach dem Öffnen entgegen der Öffnungsrichtung (O) aus dem auswerferseitigen Gesenk (9) herausbewegt wird.

8. Spritzgusswerkzeug (1) für eine Spritzgussanlage umfassend eine Düsenseite (3) und eine Auswerferseite (5), das derart ausgelegt ist, dass die Düsenseite (3) und die Auswerferseite (5) in einer geschlossenen Position des Spritzgusswerkzeugs (1) aneinander anliegen und zum Öffnen des Spritzgusswerkzeugs (1) die Düsenseite (3) und die Auswerferseite (5) in einer Öffnungsrichtung (O) voneinander wegbewegbar sind, **dadurch gekennzeichnet, dass** die Öffnungsrichtung (O) von einer durch die Spritzgussanlage definierten Axialrichtung (A) abweicht.

9. Spritzgusswerkzeug (1) nach Anspruch 8, wobei die Auswerferseite (5) an einer der Düsenseite (3) zugewandten Auswerferseite-Innenseite (7) ein auswerferseitiges Gesenk (9) aufweist und die Düsenseite (3) an einer der Auswerferseite (5) zugwandten Düsenseite-Innenseite (11) ein düsenseitiges Gesenk (13) aufweist, wobei die Gesenke (9, 13) derart geformt sind, dass eine Gesenktrennebene (G) an der die Gesenke (9, 13) in der geschlossenen Position des Spritzgusswerkzeugs (1) aneinander anliegen senkrecht zur Öffnungsrichtung (O) orientiert ist.

10. Spritzgusswerkzeug (1) nach Anspruch 9, wobei die Auswerferseite (5) eine von der Auswerferseite-Innenseite (7) hervorstehende Erhöhung (15) aufweist, in der das auswerferseitige Gesenk (9) ausgebildet ist.

11. Spritzgusswerkzeug (1) nach Anspruch 8 oder 9, wobei die Düsenseite (3) an der Düsenseite-Innenseite (11) eine Vertiefung (21) aufweist, in der das düsenseitige Gesenk (13) ausgebildet ist, wobei insbesondere das düsenseitige Gesenk (13) in einer in der Vertiefung (21) angeordneten Erhöhung (23) ausgebildet ist.

12. Spritzgusswerkzeug (1) nach Anspruch 10 oder 11, wobei die Erhöhung (15, 16) an der Düsenseite (3) und/oder die Erhöhung (23) an der Auswerferseite (5) als separates Bauteil ausgebildet ist das lösbar mit der Düsenseite (3) oder der Auswerferseite (5) verbindbar ist.

13. Spritzgusswerkzeug (1) nach einem der Ansprüche 9 bis 12, wobei die Düsenseite (3) eine Düse (4) umfasst, die sich parallel zur Axialrichtung (A) von einer der Auswerferseite (5) abgewandten Düsenseite-Aussenseite (45) zu dem düsenseitigen Gesenk (13) an der Düsenseite-Innenseite (11) erstreckt.

14. Spritzgussteil (100) hergestellt durch das Verfahren gemäss einem der Ansprüche 1 bis 7 und/oder mit einem Spritzgusswerkzeug (1) nach einem der Ansprüche 8 bis 13, umfassend zwei durch eine Mittelebene (M) definierte Hälften (101, 103), **dadurch gekennzeichnet, dass** eine Anspritzstelle (105) an der Aussenseite des Spritzgussteils (100) zwischen der Mittelebene (M) und einer Normale (N) zur Mittelebene (M) angeordnet ist.

15. Spritzgussteil (100) nach Anspruch 14 bestehend aus oder umfassend Kunststoff, insbesondere thermoplastischem Kunststoff, wobei insbesondere das Spritzgussteil (100) eine Komponente eines Injektionsgeräts, wie ein Injektionspen oder ein Autoinjektor, ist.
